# EUROPÄISCHE PATENTSCHRIFT

(11) **EP 0 479 193 B1**
(45) Veröffentlichungstag und Bekanntmachung des Hinweises auf die Patenterteilung: **27.07.1994**
(21) Anmeldenummer: 91116662.7
(22) Anmeldetag: 30.09.1991
(51) Int. Cl.: F16D 65/02

(54) **Scheibenbremse und Bremsbackenpaar für eine solche**
Disc brake and brake pads for such a brake
Frein à disque et mâchoires pour un tel frein

(30) Priorität: 01.10.1990 DE 9013699 U
(43) Veröffentlichungstag der Anmeldung: 08.04.1992
(73) Patentinhaber: LUCAS INDUSTRIES PUBLIC LIMITED COMPANY, Solihull, West Midlands B91 3TX (GB)
(72) Erfinder: Heibel, Helmut, W-5431 Moschheim (DE)
(74) Vertreter: Goetz, Rupert, Dipl.-Ing.

(56) Entgegenhaltungen:
- EP-B- 0 229 618
- DE-B- 2 558 141
- DE-U- 1 936 287

## Beschreibung

Die Erfindung betrifft ein Bremsbackenpaar mit einer Feder.

Ebenfalls betrifft die Erfindung eine Scheibenbremse mit einem solchen Bremsbackenpaar.

DE-U-1 936 287 offenbart eine Scheibenbremse mit einer Feder, die zwischen den Abstützebenen der Bremsbacken aufgehängt ist und zwei Federarme aufweist, die von der Aufhängung zu den Bremsbacken ragen.

Eine Scheibenbremse der eingangs genannten Art ist auch aus der EP 0 229 618 B1 bekannt.

Dort ist eine U-förmige Feder so ausgestaltet, daß ihre Schenkel über die Bremsscheibe ragen und die Schenkel sind derart gebogen, daß auf der einlaufenden Seite der Bremse eine Verdrehung der Bremsbacken in entgegengesetzte Richtungen erfolgt. Der mittlere Basisabschnitt der U-förmigen Feder liegt nicht zwischen den Abstützebenen der Bremsbacken, sondern außerhalb des Zwischenraumes zwischen den Abstützebenen.

In Übereinstimmung mit dem Gegenstand der vorliegenden Erfindung liegt auch der U-förmigen Feder des Standes der Technik die Aufgabe zugrunde, ein Klappern und metallisches Anschlagen der Bremsbacken in der Bremse zu vermeiden. Solche Klappergeräusche sind bei Scheibenbremsen der hier in Rede stenenden Art unvermeidbar, weil die Führungen des Schwimmsattels jeweils ein kleines Spiel benötigen. Typischerweise beträgt solches Spiel 0,06 bis 0,12 mm und läßt sich aus wirtscnaftlichen Gründen nicht verringern.

Der Erfindung liegt die Aufgabe zugrunde, das eingangs genannte Bremsbackenpaar dahingehend weiterzuentwickeln, daß mit einfachen Mitteln auch bei unterschiedlichem Verschleiß der Reibbeläge der Bremsbacken eine zumindest annährend gleiche Spannwirkung der Feder über die Bremsbacken auf den Schwimmsattel gewährleistet ist.

Erfindungsgemäß wird diese Aufgabe durch die Merkmale der Anspruchs 1 gelöst.

In einer vorteilhaften Ausgestaltung der Erfindung ist vorgesehen, daß zur Aufhängung der Feder ein Stift etwa mittig im Bereich der Oberkante des Bremsbackens montiert ist (in einem Bereich, in dem kein Reibbelag angeordnet ist), so daß die Feder mit einem wendelförmig gewundenen Teil auf den Stift aufschiebbar ist. Der Stift bildet also eine Aufhängung für die Feder.

Bevorzugt stehen von dem gewundenen Abschnitt der Feder zwei Arme ab, wobei ein Arm mit derjenigen Bremsbacke in Eingriff steht, an welcher die Feder befestigt ist, während der andere Arm über die Bremsscheibe greift und mit dem auf der anderen Seite der Bremsscheibe angeordneten Bremsbacken in Eingriff steht.

Bevorzugt sind zur Verstärkung der die Verspannung der Bremsbacken bewirkenden Kraft zwei Federn der vorstehend beschriebenen Art vorgesehen, von denen jeweils eine an einer der beiden Bremsbacken montiert ist und zwar derart, daß die Kräfte symmetrisch in bezug auf eine durch die Aufhängungen gehende Achse wirken.

Die Federarme einer Feder erstrecken sich dabei ausgehend von der Aufhängung jeweils auf einer Seite der mittleren Symmetrieebene der Bremse, wobei diese Symmetrieebene die Achse der Bremse enthält. Mit anderen Worten: bevorzugt erstrecken sich die beiden Arme einer Feder entweder zur Einlaufseite oder zur Auslaufseite der Bremse.

Die Erfindung umfaßt auch ein Bremsbackenpaar für eine vorstehend beschriebene Scheibenbremse, welches erfindungsgemäß folgende Merkmale aufweist: zumindest eine der beiden Bremsbacken weist einen Stift auf zur Montage einer Feder, der Stift steht belagseitig von der Belagrückenplatte des Bremsbackens vor und zumindest die Belagrückenplatte des anderen Bremsbackens weist eine Ausnehmung auf zur Aufnahme eines Armes der Feder.

Gemäß einer bevorzugten Ausgestaltung des Bremsbackenpaares ist vorgesehen, daß von beiden Bremsbacken an ihren Belagrückenplatten jeweils belagseitig ein Stift vorsteht und daß beide Belagrückenplatten jeweils eine Ausnehmung aufweisen, wobei die Ausnehmungen so angeordnet sind, daß sie im Montagezustand der Bremsbacken diametral gegenüber liegen und jeweils einen Arm einer Feder aufnehmen können, die auf jeweils dem Stift der anderen Belagrückenplatte montierbar ist.

Nachfolgend wird ein Ausführungsbeispiel der Erfindung anhand der Zeichnung näher erläutert. Es zeigt:
- Fig. 1: eine Schwimmsattel-Teilbelag-Scheibenbremse schematisch in Draufsicht,
- Fig. 2: einen Schnitt durch die Scheibenbremse gemäß Fig. 1 parallel zur Achse der Bremse;
- Fig. 3A: eine Detailansicht eines Bremsbackens mit Feder in Richtung des Pfeiles P von Fig. 2;
- Fig. 3B: eine Draufsicht auf Einzelheiten von Fig. 2 (entsprechend Fig. 3A), und
- Fig. 4: eine Ansicht ähnlich Fig. 3A in vergrößertem Maßstab.

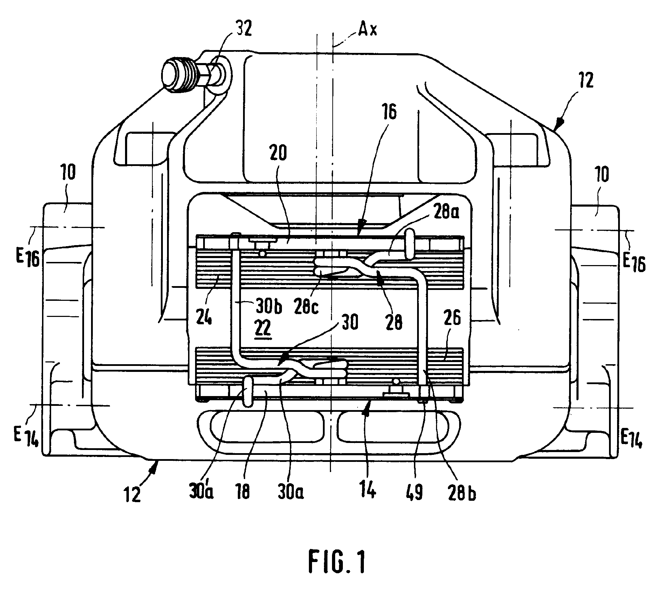

Gemäß Fig. 1 ist eine Schwimmsattel-Teilbelag-Scheibenbremse als Ausführungsbeispiel der Erfindung in bezug auf einen fahrzeugfesten Bremsträger 10 abgestützt. Der Bremsträger 10 nimmt die Bremskräfte auf. In einem Schwimmsattel 12 sind Bremsbacken 14, 16 angeordnet, die jeweils eine Belagrückenplatte 18 bzw. 20 aufweisen. Der Sattel 12 übergreift eine Bremsscheibe, deren Stellung mit dem Bezugszeichen 22 angedeutet ist.

Jeder der Bremsbacken 14, 16 weist jeweils einen Reibbelag 24 bzw. 26 auf. Insoweit ist die Bremse herkömmlicher Art.

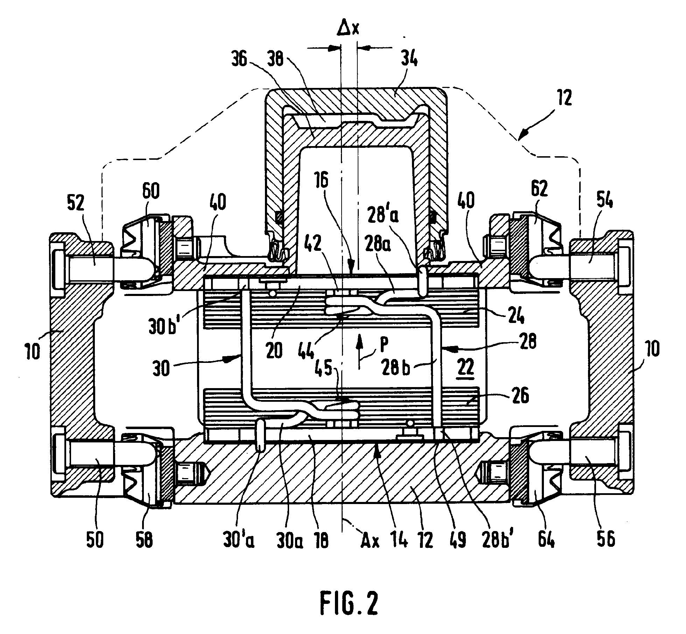

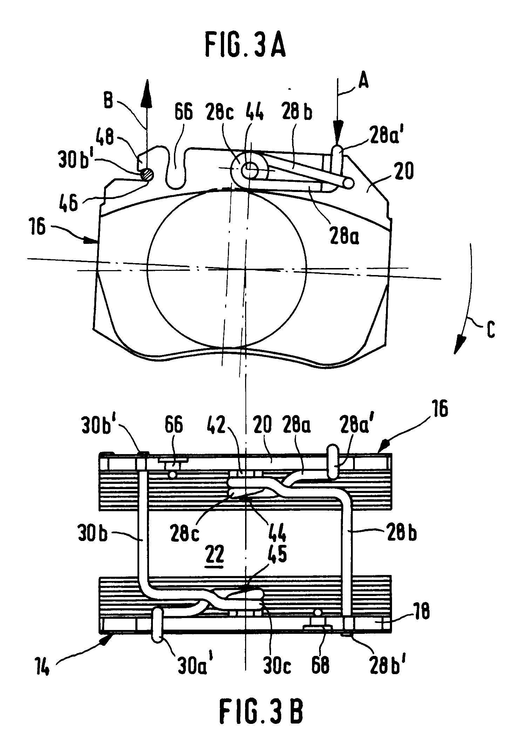

Eine Feder 28 ist in weiter unten näher beschriebener Weise an der Belagrückenplatte 20 des Bremsbackens 16 befestigt. Die Feder 28 weist zwei Federarme 28a und 28b auf, die von einem gewundenen Abschnitt 28c der Feder 28 abstehen, und zwar gemäß den Fig. 1 und 2 in bezug auf eine Mittelachse Ax der Bremse nach rechts. Mit einem bügelförmigen Endabschnitt 28a′ (Fig. 2) übergreift der Federarm 28a die Belagrückenplatte 20 und drückt diese aufgrund der Spannkraft der Feder 28 nach unten. Dies ist in Fig. 3A durch den Pfeil A angedeutet.

Entsprechend der vorstehend beschriebenen Feder 28 ist eine weitere Feder 30 auf dem anderen Bremsbacken 14 montiert. Auch die Feder 30 weist Teile auf, die den mit entsprechenden Buchstaben versehenden Teilen der Feder 28 entsprechen. Die Arme 30a und 30b der Feder 30 erstrecken sich in den Fig. 1 und 2 von der Aufhängung an der Belagrückenplatte 18 ausgehend auf der linken Seite der Achse Ax.

Fig. 1 und Fig. 2 zeigen weiter einen als solches bekannten Anschluß (nicht gezeigt) unterhalb einer Entlüftungsschraube 32 für unter Druck stehende Hydraulikflüssigkeit sowie eine Anordnung aus Zylinder 34 und Kolben 36 zum Betätigen der Bremse. Bei einer Bremsbetätigung wird Druck im Druckraum 38 des Zylinders 34 erzeugt und der Kolben 36 bewegt sich in bekannter Weise in Fig. 2 nach unten, so daß ein mit dem Kolben 36 verbundener Schlitten 40, an dem der Bremsbacken 16 befestigt ist, ebenfalls in Richtung auf die Bremsscheibe 22 gedrückt wird. Dabei bewegt sich der Schwimmsattel 12 in den Fig. 1 und 2 nach oben, so daß der Bremsbacken 14 ebenfalls nach oben bewegt wird und mit der anderen Seite der Bremsscheibe 22 in Eingriff kommt.

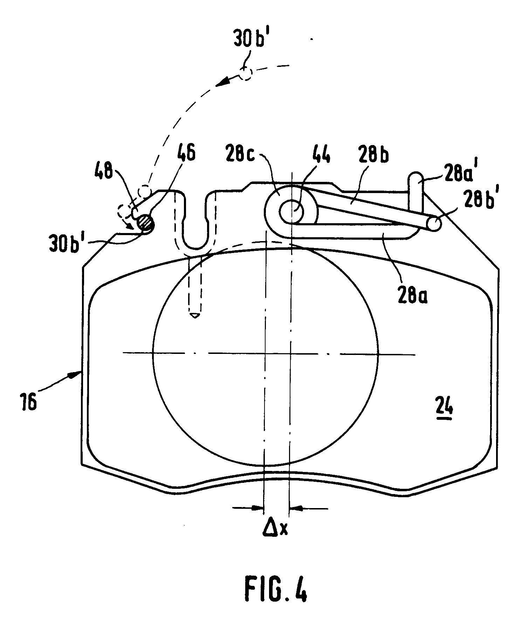

Die Federn 28, 30 sind jeweils auf Stiften 44, 45 montiert. Die Stifte sind als Zapfen auf einem Schraubenkopf ausgebildet. Die Schraube 42 hält die Belagrückenplatte 18 bzw. 20 an dem Schwimmsattel 12 bzw. an dem Schlitten 40. Somit stehen die Stifte 44, 45 benachbart den Oberkanten der zugehörigen Belagrückenplatten, etwa in der Mitte der selben, in Richtung parallel zur Achse Ax vor. Die Federn sind mit ihren gewundenen Abschnitten 28c bzw. 30c auf die Stifte aufgeschoben, welche somit eine Aufhängung für die Federn bilden. Wie oben bereits ausgeführt ist, übergreifen die Federarme 28a und 30a mit ihren bügelförmigen Abschntiten 28a′ bzw. 30a′ jeweils die zugeordneten Belagrückenplatten und drücken diese im eingebauten Zustand nach unten, d.h. in Fig. 2 in die Papierebene hinein. Andererseits untergreifen die jeweils anderen Arme 28b und 30b der Federn Ausnehmungen 46, 49 in den jeweils anderen Belagrückenplatten 20 bzw. 18. Dies ist Fig. 3A und Fig. 4 zu entnehmen. Beim Einbau der Federn 28 und 30 in die Bremse werden diese zunächst mit den wendelförmig gewundenen Abschnitten 28c, 30c auf die zugeordneten Stifte 44 bzw. 45 aufgeschoben und die Federbügel 28a′ und 30a′ werden in der beschriebenen Weise über die zugeordneten Belagrückenplatten 18 bzw. 20 gedrückt. Sodann werden die beiden Federn 28, 30 etwa an der Stelle, an der die Pfeile der Bezugszeichen 28, 30 an den Federn enden, niedergedrückt und in die zugeordneten Ausnehmungen 46 bzw. 49 in den Belagrückenplatten eingerastet. Dabei hintergreifen die Endabschnitte 28b′ und 30b′ (Fig. 2, 3B und insbesondere 3A) eine Nase 48 an der Belagrückenplatte. Im eingebauten gespannten Zustand bewirkt deshalb die Feder 28 über den Federbügel 28a′ eine Kraft auf den Bremsbacken 16, die dem Pfeil A (Fig. 3A) folgt, d.h. der Bremsbacken 16 erfährt eine Drehbewegung in Richtung des Pfeiles C (Fig.3A), welche das Toleranzspiel überwindet und ein Klappern des Bremsbackens zuverlässig verhindert. Weiterhin hintergreift der Arm 28b der Feder 28 den anderen Bremsbacken 14 und ist in den Fig. 2 und 3B nach oben gespannt, d.h. auf die Belagrückenplatte 18 wirkt eine Kraft, die in den Fig. 2 und 3B senkrecht zur Papierebene, nach oben aus dieser Ebene herausgerichtet ist.

Somit verdreht die Feder 28 die beiden Bremsbacken 14, 16 und somit auch den Schwimmsattel 12 und den Schlitten 40 gegensinnig. In Richtung des Pfeiles P (Fig. 2) betrachtet, wird der Bremsbacken 16 mit dem Schlitten 40 im Uhrzeigersinn verdreht, während der Bremsbacken 14 mit dem Schwimmsattel 12 gegen den Uhrzeigersinn verdreht wird. Beide Verdrehungen erfolgen um eine zur Achse Ax parallele Achse, wie Fig. 3A zu entnehmen ist. Die Wirkung der Feder 30 ist analog derjenigen der Feder 28, nur in jeweils umgekehrten Sinn, d.h. die Federn 28 und 30 verstärken ihre Wirkung symmetrisch in bezug auf die Achse Ax. Das Federende 30b' hintergreift gemäß Fig. 2 und 3A sowie 3B die Belagrückenplatte 20, so daß gemäß Fig. 3A eine aufwärts gerichtete Kraft B auf den Bremsbacken 16 wirkt. Auch die übrige Wirkung der Feder 30 ergibt sich aus der Beschreibung der Feder 28.

Durch das gegensinnige Verdrehen von Schwimmsattel 12 und Schlitten 40 werden die Spiele in den Führungen 58, 60, 62, 64 überwunden und Geräusche zuverlässig vermieden.

Durch dieses gegensinnige Verdrehen werden die Spiele ausschließlich in den zur Bremsscheibe parallelen Ebenen E₁₄ und E₁₆ überwunden; die Achse Ax der Bremse verbleibt parallel zur Achse der Bremsscheibe 22, wodurch auch die Reibflächen der Bremsbeläge exakt parallel zu den Reibflächen der Bremsscheibe verbleiben. Hierduch ist ein Positionieren (Freimachen) der Beläge in bezug auf die Bremsscheibe mit einem Spiel nahe Null möglich.

Fig. 2 zeigt die Abstützung der Bremsbacken 14, 16 in bezug auf den Bremsträger 10. Diese Abstützung entspricht derjenigen gemäß der eingangs bereits genannten EP 0 229 618 B1, d.h. es sind Führungsstifte 50, 52, 54, 56 vorgesehen, die am Bremsträger 10 befestigt sind und in jeweils zugeordnete Führungsnuten 58, 60, 62 und 64 eingreifen. Auf diese Weise werden die Abstützebenen E₁₄, E₁₆ für die Bremsbacken 14 bzw. 16 gebildet, welche in Fig. 1 schematisch angedeutet sind. Die Abstützebenen liegen etwa in Höhe der Belagrückenplatten 18 bzw. 20. Somit liegen die an den Stiften 44 und 45 gebildeten Aufhängungen für die Federn 28 und 30 zwischen den Abstützebenen E₁₄, E₁₆ der Bremsbacken 14 bzw. 16. Aus der vorstehenden Beschreibung ergibt sich, daß an den Aufhängungen selbst die Federn kaum Kräfte übertragen, d.h. die Kräfte auf die Stifte 44, 45 sind sehr gering. Die Montage der Federn ist relativ einfach und in Fig. 4 angedeutet. Nachdem, wie oben beschrieben, der wendelförmige Abschnitt 30c der Feder 30 auf den Stift 45 geschoben ist und der zugehörige Federbügel 30a' über die Belagrückenplatte 18 gedrückt ist, wird der andere Federarm 30b an seinem langen, sich etwa parallel zur Achse Ax erstreckenden Teil niedergedrückt (etwa dort, wo der Pfeil des Bezugszeichens 30 endet), was in Fig. 4 oben links dargestellt ist. Danach gleitet das Federende 30b' an der Außenfläche der Nase 48 unter Wirkung der vorstehend genannten Druckkraft nach unten und rastet dann in die Ausnehmung 46 ein.

Die Figuren enthalten weiterhin noch eine Ausnehmung 66 für eine Belagverschließwarneinrichtung (nicht gezeigt) sowie den Versatz Δ x von Kolbenmitte zur Bremsbelagmitte.

Vorstehend wurde die Erfindung anhand einer Schwimmsattel-Teilbelag-Scheibenbremse beschrieben. Sie läßt sich auch bei anderen Bremsen einsetzen, insbesondere bei herkömmlichen Schwimm- und Festsattelbremsen.

## Patentansprüche

1. Bremsbackenpaar (14, 16) für eine Scheibenbremse mit einer Feder (28, 30),
dadurch **gekennzeichnet**, daß die Feder (28, 30) an einer Belagrückenplatte (18, 20) eines Bremsbackens (14, 16) befestigt ist und mit zwei Federarmen (28a, 28b, 30a, 30b) auf beide Bremsbacken (14, 16) des Bremsbackenpaares im Sinne gegenseitiger Verdrehung wirkt.

2. Bremsbackenpaar für eine Scheibenbremse,
**gekennzeichnet** durch folgende Merkmale:
zumindest einer der beiden Bremsbacken (14, 16) weist einen hieran befestigten Stift (44, 45) zur Montage einer Feder (28, 30) auf, der Stift steht belagseitig von der Belagrückenplatte (18, 20) des Bremsbackens vor und zumindest die Belagrückenplatte des anderen Bremsbackens weist eine Ausnehmung (46, 49) zur Aufnahme eines Armes (28b, 30b) der Feder (28, 30) auf.

3. Bremsbackenpaar nach Anspruch 2,
dadurch **gekennzeichnet**, daß von beiden Bremsbacken (14, 16) an ihren Belagrückenplatten (18, 20) jeweils belagseitig ein Stift (44, 45) vorsteht und daß beide Belagrückenplatten jeweils eine Ausnehmung (46, 49) aufweisen, wobei die Ausnehmung so angeordnet sind, daß sie im Montagezustand der Bremsbacken diametral gegenüber liegen und jeweils einen Arm (28b, 30b) einer Feder aufnehmen können, die auf jeweils einem Stift (44, 45) der anderen Belagrückenplatte montierbar ist.

4. Scheibenbremse mit zwei Bremsbacken (14, 16), zwischen denen eine Bremsscheibe (22) einklemmbar ist und die in bezug auf einen Bremsträger (10) abgestützt sind, und mit zumindest einer Feder (28, 30) zum gegensinnigen Verdrehen der zwei Bremsbacken um eine im wesentlichen senkrecht zur Bremsscheibe (22) stehende Achse (Ax),
dadurch **gekennzeichnet**, daß die Feder (28, 30) an einer Belagrückenplatte (18, 20) eines Bremsbackens (14, 16) befestigt ist und mit zwei Federarmen (28a, 28b, 30a, 30b) auf beide Bremsbacken (14, 16) im Sinne gegenseitiger Verdrehung einwirkt.

5. Scheibenbremse nach Anspruch 4,
dadurch **gekennzeichnet**, daß die Aufhängung (28c, 30c, 44, 45) einen Stift (44, 45) aufweist, der an einer Belagrückenplatte (18, 20) des Bremsbackens (14, 16) befestigt ist.

6. Scheibenbremse nach Anspruch 5,
dadurch **gekennzeichnet,** daß die Feder (28, 30) um den Stift (44, 45) gewunden ist.

7. Scheibenbremse nach einem der vorhergehenden Ansprüche, dadurch **gekennzeichnet**, daß zwei Federn (28, 30) vorgesehen sind, die der Bremsscheibe (22) zugekehrt jeweils an den Belagrückenplatten (18, 20) befestigt sind und mit jeweils einem Federarm (28b, 30b) die Bremsscheibe (22) übergreifen.

8. Scheibenbremse nach einem der vorhergehenden Ansprüche, dadurch **gekennzeichnet**, daß die Federarme (28a, 28b; 30a, 30b) sich von der Aufhängung aus jeweils zur gleichen Seite der Bremse erstrecken.

## Claims

1. A pair of brake pads (14, 16) for a disc brake comprising a spring (28, 30), **characterized** in that the spring (28, 30) is fastened to a friction lining backplate (18, 20) of a brake pad (14, 16) and has two spring arms (28a, 28b, 30a, 30b) acting on the two brake pads (14, 16) of the pair in the sense of counter-rotating them.

2. A pair of brake pads for a disc brake, **characterized** by the following features:
at least one of the two brake pads (14, 16) comprises a pin (44, 45) fastened to the brake pad and serving to mount a spring (28, 30), the pin protrudes from the friction lining backplate (18, 20) of the brake pad at the side of the friction lining, and at least the friction lining backplate of the other brake pad has a recess (46, 49) to receive an arm (28b, 30b) of the spring (28, 30).

3. The pair of brake pads as claimed in claim 2, characterized in that both brake pads (14, 16) have a respective pin (44, 45) protruding from their friction lining backplates (18, 20) at the side of the friction lining, and that the two friction lining backplates each have a recess (46, 49) disposed such that they are located opposite each other when the brake pads are in their mounted states and that they each can take up an arm (28b, 30b) of a spring adapted to be mounted on a pin (44, 45) each of the other friction lining backplate.

4. A disc brake comprising two brake pads (14, 16) between which a brake disc (22) is adapted to be clamped and which are supported with respect to a brake carrier member (10), further comprising at least one spring (28, 30) for counter-rotating the two brake pads about an axis (Ax) which extends substantially at right angles to the brake disc (22), **characterized** in that the spring (28, 30) is fastened to a friction lining backplate (18, 20) of a brake pad (14, 16) and has two spring arms (28a, 28b, 30a, 30b) acting on the two brake pads (14, 16) in the sense of counter-rotating them.

5. The disc brake as claimed in claim 4, characterized in that the suspension (28c, 30c, 44, 45) comprises a pin (44, 45) which is fastened to a friction lining backplate (18, 20) of the brake pad (14, 16).

6. The disc brake as claimed in claim 5, characterized in that the spring (28, 30) is wound around the pin (44, 45).

7. The disc brake as claimed in any one of the preceding claims, characterized in that two springs (28, 30) are provided, each being fastened to the respective friction lining backplate (18, 20) so as to face the brake disc (22) and straddling the brake disc (22) by one spring arm (28b, 30b) each.

8. The disc brake as claimed in any one of the preceding claims, characterized in that the spring arms (28a, 28b; 30a, 30b) each extend towards the same side of the brake, from the suspension.

## Revendications

1. Paire de mâchoires de frein (14, 16) pour un frein à disque, comportant un ressort (28, 30),
caractérisée en ce que le ressort (28, 30) est fixé sur une plaque porte-garniture (18, 20) d'une mâchoire de frein (14, 16) et agit avec deux bras de ressort (28a, 28b, 30a, 30b) sur les deux mâchoires (14, 16) dans le sens d'une rotation réciproque.

2. Paire de mâchoires de frein pour un frein à disque caractérisée en ce que : l'une au moins des deux mâchoires (14,16) présente une tige (44,45) fixée à celles-ci pour le montage d'un ressort (28, 30), la tige fait saillie du côté de la garniture, de la plaque porte-garniture (18, 20) de la mâchoire, et la plaque porte-garniture au moins de l'autre mâchoire de frein présente un évidement (46, 49) pour la réception d'un bras (28b, 30b) du ressort (28, 30).

3. Paire de mâchoires de frein selon la revendication 2, caractérisée en ce qu'une tige (44, 45) fait saillie sur les deux mâchoires de frein (14, 16), du côté garniture de leurs plaques porte-garniture (18, 20) respectives, et en ce que les deux plaques porte-garniture présentent chacune un évidement (46, 49), ces évidements étant disposés de façon à être diamétralement opposés lorsque les mâchoires sont montées, et à pouvoir recevoir chacun un bras (28b, 30b) d'un ressort qui peut être monté chaque fois sur une tige (44, 45) de l'autre plaque porte-garniture.

4. Frein à disque comportant deux mâchoires (14, 16), entre lesquelles peut être serré un disque de frein (22) et qui sont supportées par un support de frein (10), et au moins un ressort (28, 30) pour la rotation des deux mâchoires de frein en sens inverse autour d'un axe (Ax) sensiblement perpendiculaire au disque de frein (22),
caractérisé en ce que le ressort (28, 30) est fixé sur une plaque porte-garniture (18, 20) d'une mâchoire de frein (14, 16), et agit par deux bras de ressort (28a, 28b, 30b, 30b) sur les deux mâchoires (14, 16) dans le sens d'une rotation réciproque.

5. Frein à disque selon la revendication 4, caractérisé en ce que les moyens de fixation du ressort (28c, 30c, 44, 45) comportent une tige (44, 45) qui est fixée sur une plaque porte-garniture (18, 20) de la mâchoire de frein (14, 16).

6. Frein à disque selon la revendication 5, caractérisé en ce que le ressort (28, 30) est enroulé autour de la tige ( 44, 45).

7. Frein à disque selon l'une des revendications précédentes, caractérisé en ce que deux ressorts (28, 30) sont prévus, fixés chacun sur une plaque porte-garniture (18, 20), en regard du disque de frein (22), et un bras de chaque ressort (28b, 30b) passe au-dessus du disque à frein (22).

8. Frein à disque selon l'une des revendications précédentes, caractérisé en ce que les bras de ressort (28a, 28b; 30a, 30b) s'étendent chaque fois du même côté du frein, à partir des moyens de fixation du ressort.
